# EUROPEAN PATENT APPLICATION

(11) **EP 4 362 170 A1**
(43) Date of publication of application: **01.05.2024**
(21) Application number: 22203610.5
(22) Date of filing: 25.10.2022
(51) Int. Cl.: H01M 10/613, H01M 10/625, H01M 10/643, H01M 10/6555, H01M 10/6556, H01M 50/213

(54) **BATTERY**

(71) Applicant: MAHLE International GmbH, 70376 Stuttgart (DE)
(72) Inventor: CORBISHLEY, Robert, NN128SJ Wappenham (GB); CUMMINGS, Gareth, CV23 8XH Kilsby Rugby (GB); PARRY, Owain, NN28SE Boughton (GB)
(74) Representative: BRP Renaud & Partner mbB Rechtsanwälte Patentanwälte Steuerberater

(57) **Abstract**

The invention relates to a battery (1) for a motor vehicle. The battery (1) contains a cell stack (2) with a plurality of battery cells (3) and a cooling device (8) with a cooling plate (12) and with at least one cooling fin (20). The cooling plate (12) is connected to the battery cells (3) in a heat-conducting manner. The respective cooling fin (20) is arranged adjacent to at least some battery cells (3) in the respective cell row and is connected to the battery cells (3) and the cooling plate (12) in a heat-conducting manner. The respective cooling fin (20) is formed in one piece from a heat-conducting material and encloses at least one of the respective adjacent battery cells (3) at its circumference defined transversely to the longitudinal direction (LR) by 25% to 50%.

## Description

The invention relates to a battery for a motor vehicle according to the generic term of claim 1.

A generic battery contains a cell stack with a plurality of battery cells arranged side by side in a plurality of cell rows. During operation of the battery, generated heat can be transferred to the outside via a bottom plate arranged adjacent to the battery cells. Due to an insufficient axial thermal conductivity of the battery cell - approx. 15-30 W/mK- a high axial temperature gradient results in the battery cell. This leads to variations in the electrochemical state throughout the battery cell and thus to premature aging of the battery cell and to accelerated degradation of the cell capacity.

Alternatively, cooling ribbons with an internal coolant-guiding channel can be arranged between the battery cells. The respective channel is appropriately narrow to transfer the required amount of coolant at a sufficiently high pressure. Cooling fins can also be arranged between the battery cells, which are connected to the bottom plate in a heat-conducting manner. The empty spaces between the battery cells and the cooling fins can then be filled with a plastic potting compound.

DE 10 2006 059 989 A1 discloses a battery with several battery cells and several cooling cores arranged between the battery cells. The cooling cores are formed from a heat-conducting material and are connected to the battery cells in a heat-conducting manner via a plastic potting compound enclosing the respective cooling cores. The potting compound usually has a high curing temperature at which the battery cells can be damaged.

It is therefore the object of the invention to provide an improved or at least alternative embodiment for a battery of the type described, in which the disadvantages described are overcome.

This object is solved according to the invention by the object of independent claim 1. Advantageous embodiments are the subject of the dependent claims.

The present invention is based on the general idea of adapting cooling fins to a contour of the battery cells and bonding them to the battery cells.

The battery according to the invention is provided or designed for a motor vehicle. The battery contains a cell stack with a plurality of battery cells and a cooling device with a cooling plate and with at least one cooling fin. The battery cells are aligned in the cell stack parallel to a longitudinal direction of the cell stack and arranged side by side in at least one cell row. The cooling plate is aligned transversely to the longitudinal direction of the cell stack and is connected to the battery cells in a heat-conducting manner. The respective cooling plate is arranged parallel to the longitudinal direction of the cell stack and adjacent to at least some battery cells in the respective cell row. Thereby, the respective cooling fin is connected to the respective adjacent battery cells in the respective cell row and to the cooling plate in a heat-conducting manner. According to the invention, the respective cooling fin is formed in one piece or integrally from a heat-conducting material. The respective cooling fin encloses i.e. surrounds at least one of the respective adjacent battery cells at its circumference defined transversely to the longitudinal direction by 25% to 50%. In particular, the respective cooling fin can directly enclose i.e. surround the respective adjacent battery cells and/or be directly connected to the respective adjacent battery cells in a heat-conducting manner.

In the battery according to the invention, at least one and preferably each of the respective battery cells can be enclosed i.e. surrounded by the respective cooling fin directly - i.e. without further heat-conducting elements and/or further heat-conducting thick layers such as potting compound - and at least to 25%. This allows the heat from the battery cells to be conducted directly to the cooling fin and further to the cooling plate. Thus, the heat conduction path from the battery cells to the cooling plate can be improved and the battery cells can be effectively cooled. In addition, the potting compound conventionally used to fill gaps between conventional cooling fins and the battery cells can be avoided. Since the potting compound made of plastic usually has low thermal conductivity, this improves the cooling of the battery cells and also simplifies assembly.

The battery cells are aligned in the cell stack parallel to the longitudinal direction. The battery cells can be cylindrical or prismatic. The longitudinal center axes or the rotation axes or the symmetry axes of the battery cells are then aligned in the cell stack parallel to the longitudinal direction of the cell stack and the battery cells are arranged or stacked next to each other in at least one cell row. The battery cells are preferably electrically interconnected in parallel in the cell stack. The respective cooling fin can be arranged at least in regions on the respective cell row. Accordingly, the respective cooling fin can be adjacent to and connected in heat-conducting manner to only some battery cells or to all battery cells of the respective cell row. The respective cooling fin can extend in the longitudinal direction of the cell stack over 80% to 100% of the height of the respective adjacent battery cells.

The respective cooling fin can contain a contour for the respective adjacent battery cells. The contour can follow the shape of the respective adjacent battery cells and the respective cooling fin can then fit tightly against the respective adjacent battery cells with the contour over the entire surface in a heat-conducting manner. Due to the adapted contour, gaps between the respective cooling fin and the respective adjacent battery cells can be minimized and thus the heat transfer between the respective cooling fin and the respective adjacent battery cells can take place directly - i.e. without further heat-conducting elements and/or further heat-conducting thick layers such as potting compound.

The battery cells can be cylindrical and the respective cooling fin can enclose i.e. surround at least one and preferably each of the respective adjacent battery cells with a central angle between 90° and 180° defined to the respective longitudinal central axis of the respective adjacent battery cell. The cylindrical battery cells can be arranged side by side in the cell stack in the densest packing. In the densest packing, the battery cells of the two adjacent cell rows are arranged offset from each other by half a diameter along the respective cell rows. For the cylindrical battery cell, the central angle of 90° corresponds to its circumference of 25% and the central angle of 180° corresponds to its circumference of 50%. In particular, the cylindrical battery cells can contain a format 21700 with a diameter of 21 mm and a length of 70 mm or a format 4680 with a diameter of 46 mm and a length of 80 mm or a format 18650 with a diameter of 18 mm and a length of 65 mm. In principle, other formats are also conceivable. The battery cells can alternatively be prismatic.

The cooling plate can be formed from a heat-conducting material, preferably from metal, particularly preferably from aluminum. A cooling fluid can flow through the cooling plate. The respective cooling fin can be firmly connected or joined to the cooling plate. The respective cooling fin can be formed from metal, preferably from aluminum. The respective cooling fin can be produced in an extrusion process or in a casting process with post-processing or in a 3D printing process or by electrical discharge machining from a solid block of material or by sintering. The respective cooling fin is integral i.e. formed from a single piece of material.

The respective cooling fin can be bonded to the respective adjacent battery cells by means of a heat-conducting adhesive. An adhesive layer formed in this way can in particular contain a thickness of less than 1 mm. The adhesive can be sprayed onto the respective battery cells or onto the respective cooling fin. The respective cooling fin can thus be bonded to the respective adjacent battery cells by means of a spray adhesive. The adhesion can reduce the thermal resistance between the respective adjacent battery cells and the respective cooling fin. In this case, the respective cooling fin can be bonded to the respective adjacent battery cells over the entire surface in order to improve the heat transfer between the respective cooling fin and the respective adjacent battery cells.

The respective cooling fin can enclose i.e. surround the respective cell row from the outside, at least in some areas. The battery cells can form at least two cell rows in the cell stack and the respective cooling fin can be arranged between the cell rows. The respective cooling fin can thus separate the two adjacent cell rows from one another at least in certain areas. The respective cooling fin can then enclose i.e. surround at least one and preferably each of the respective adjacent battery cells in the two cell rows in each case on its circumference defined transversely to the longitudinal direction by 25% to 50%. If the respective cooling fin lies between the two adjacent cell rows, the respective cooling fin can fill at least 80% of a gap formed between the respective adjacent cell rows.

The respective cooling fin can enclose an identical number of battery cells in the two adjacent cell rows. Alternatively, the respective cooling fin can enclose one more battery cell in one cell row than in the other cell row. The cooling device can contain a plurality of cooling fins. The cooling fins can be designed i.e. formed differently from one another and/or identically to one another. Due to the corresponding design of the cooling fins, each battery cell of the cell stack can be enclosed and cooled by the cooling fins. Each of the battery cells of the cell stack can be enclosed by at least two and at most four adjacent cooling fins. In particular, each of the respective battery cells of the cell stack can be enclosed i.e. surrounded by the respective cooling fins on their circumference defined transverse to the longitudinal direction by 50% to 100%.

Further important features and advantages of the invention are apparent from the subclaims, from the drawings, and from the accompanying figure description based on the drawings.

It is understood that the above features and those to be explained below can be used not only in the combination indicated in each case, but also in other combinations or on their own, without departing from the scope of the present invention.

Preferred embodiments of the invention are shown in the drawings and will be explained in more detail in the following description, wherein identical reference signs refer to identical or similar or functionally identical components.

It shows, in each case schematically
- Fig. 1: an exploded view of a battery according to the invention with cylindrical battery cells;
- Fig. 2: a sectional view of the battery according to the invention with cylindrical battery cells;
- Figs. 3 to 6: views of differently designed cooling fins in the battery according to the invention;
- Fig. 7: an arrangement of the cooling fins in the battery according to the invention.

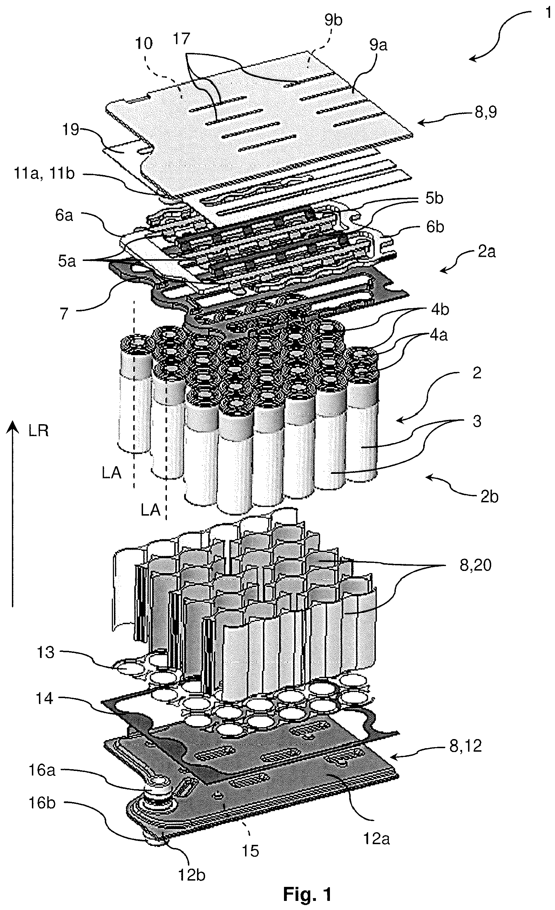

Fig. 1 shows an exploded view of a battery 1 according to the invention for a motor vehicle. Here and further, only some elements of the same type in the battery 1 are provided with reference signs for clarity. The elements not directly visible are marked with broken lines. The battery 1 contains a cell stack 2 with a plurality of cylindrical battery cells 3 which are aligned with their longitudinal center axes LA parallel to a longitudinal direction LR of the cell stack 2 and side by side forming several cell rows. The cell stack 2 contains two longitudinal ends 2a and 2b corresponding to its longitudinal direction LR. The battery cells 3 contain electrical contacts 4a and 4b - positive terminals and negative terminals - arranged at one end of the battery cells 3 and at the longitudinal end 2a of the cell stack 2.

For contacting the contacts 4a and 4b, the battery 1 contains a plurality of current busbars 5a and 5b. The current busbars 5a and 5b are arranged at the longitudinal end 2a of the cell stack 2 and are associated with the corresponding contacts 4a and 4b. Electrically conductive contact plates 6a and 6b are disposed between the battery cells 3 and the current busbars 5a and 5b. The contact plates 6a and 6b bear on i.e. are supported by the battery cells 3 and the current busbars 5a and 5b bear on i.e. are supported by the contact plates 6a and 6b. The current busbars 5a and 5b are electrically conductively connected to the contact plates 6a and 6b and electrically contacted to the outside via the contact plates 6a and 6b. The current busbars 5a and 5b are guided through openings in the contact plates 6a and 6b to the contacts 4a and 4b. A dielectric insulating layer 7 is arranged between the contact plates 6a and 6b and the battery cells 3.

The battery 1 also contains a cooling device 8 with a cooling plate 9. The cooling plate 9 is arranged at the longitudinal end 2a of the cell stack 2 and at the current busbars 5a and 5b facing away from the cell stack 2. A heat conducting layer 19 is arranged between the cooling plate 9 and the current busbars 5a and 5b. The current busbars 5a and 5b are thus connected to the cooling plate 9 in a heat-conducting manner. The cooling plate 9 contains a plate-shaped i.e. flat cover plate 9a and a structured structural plate 9b, between which channels 10 through which a cooling fluid can flow are formed. The channels 10 are fluidically connected to the outside via connectors 11a and 11b. The cooling fluid is preferably a liquid. The cover plate 9a and the structural plate 9b are joined together in a fluid-tight manner in certain areas. In addition, a plurality of slit-shaped degassing openings 17 are formed in the cooling plate 9, which are arranged parallel to and between the current busbars 5a and 5b. The degassing openings 17 thereby penetrate the cooling plate 9 in areas where the cover plate 9a and the structural plate 9b are joined together.

The cooling device 8 also contains a cooling plate 12. The cooling plate 12 is arranged at the longitudinal end 2b of the cell stack 2 and is connected to the battery cells 3 in a heat-conducting manner via a heat-conducting adhesive layer 13. The battery cells 3 are thereby connected to the cooling plate 12 in a heat-conducting manner and can be cooled. A dielectric insulating layer 14 is also arranged between the cell stack 2 and the cooling plate 12. The insulating layer 14 defines the distance between the battery cells 3 and the cooling plate 12, and thereby the thickness of the adhesive layer 13. The cooling plate 12 contains a first plate 12a and a second plate 12b, between which a cooling space 15 through which a cooling fluid can flow is formed. The cooling fluid is preferably a liquid. The cooling space 15 through which the cooling fluid can flow is fluidically connected to the outside via connectors 16a and 16b. The cooling space 15 of the cooling plate 12 can be fluidically connected to the channels 10 of the cooling plate 9 and can be flowed through by the same cooling fluid.

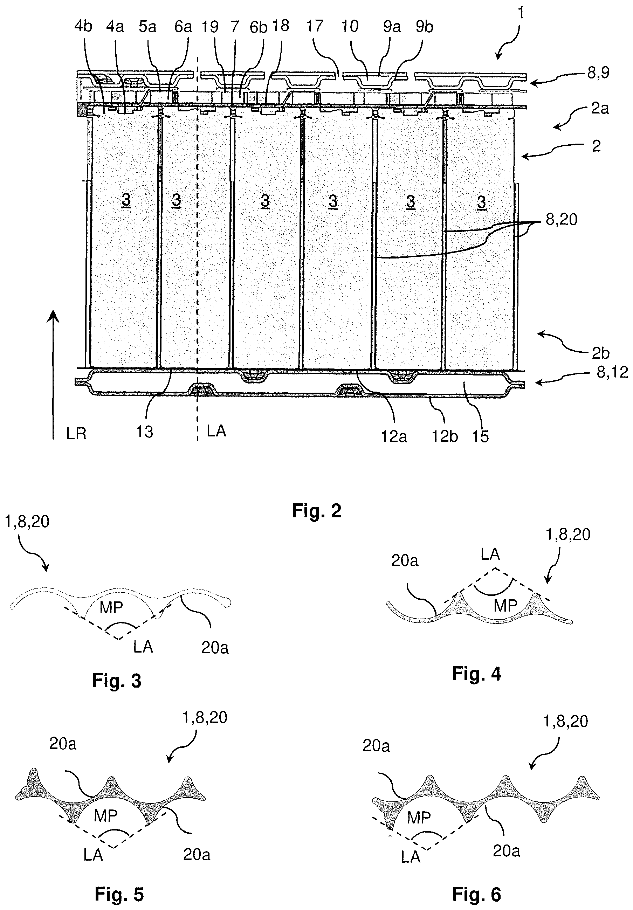

The cooling device 8 also contains a plurality of cooling fins 20 aligned parallel to the longitudinal direction LR and arranged between the battery cells 3 of the cell stack 2. The cooling fins 20 are formed from a heat-conducting material and are connected to the battery cells 3 and the cooling plate 12 in a heat-conducting manner. This allows the heat generated in the battery cells 3 to be transported from the battery cells 3 to the cooling plate 12, thereby cooling the battery cells 3. The respective cooling fin 20 can extend in the longitudinal direction LR of the cell stack 2 over 80% to 100% of the height of the respective battery cells 3. The cooling fins 20 are thereby adapted in shape to the adjacent battery cells 3 and are directly connected to the adjacent battery cells 3 in a heat-conducting manner. In order to reduce the heat conduction resistance between the cooling fins 20 and the battery cells 3, the battery cells 3 can be bonded to the cooling fins 20 via an adhesive layer, preferably with a thickness of less than 1 mm. The design of the cooling fins 20 is explained in more detail below with reference to Fig. 3 to Fig. 7.

Fig. 2 shows a sectional view of the battery 1 according to the invention. As can be seen particularly well here, the battery cells 3 are in direct heat-conducting contact with the cooling fins 20 of the cooling device 8, so that the heat can be conducted directly from the battery cells 3 to the cooling fins 20 and to the cooling plate 12. The cooling fins 20 are thereby connected to the cooling plate 12 in a heat-conducting manner. In particular, the cooling fins 20 can be joined to the cooling plate 12. A cooling fluid can flow through the cooling plate 12 so that the heat can be dissipated particularly effectively by the cooling fins 20.

Fig. 3 to Fig. 6 show views of differently designed cooling fins 20 in the battery 1 according to the invention. The respective cooling fins 20 each contain a contour 20a adapted to the shape of the adjacent battery cells 3 and rest with the respective contour 20a against the respective battery cells 3. The respective cooling fins 20 thereby enclose a plurality of the respective adjacent battery cells 3 with a respective center angle MP of between 90° and 180°. The center angle MP of 90° correlates with a circumference of 25% of the respective battery cell 3 defined transversely to the longitudinal direction LR, and the center angle MP of 180° correlates with a circumference of 50% of the respective battery cell 3 defined transversely to the longitudinal direction LR.

Fig. 3 and Fig. 4 show cooling fins 20 differing from each other, each for arrangement on the outer cell row on three adjacent battery cells 3. The cooling fins 20 accordingly contain the contour 20a adapted to three battery cells 3.

Fig. 5 and Fig. 6 show cooling fins 20 differing from each other, each for arrangement between two adjacent cell rows. The cooling fin 20 in Fig. 5 contains the contour 20a adapted to two battery cells on one side and the contour 20a adapted to three battery cells on the other side. The cooling fin 20 in Fig. 6 contains the contour 20a adapted to three battery cells on both sides.

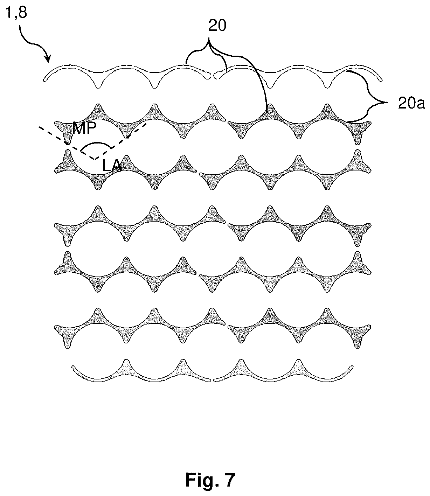

Fig. 7 shows an arrangement of the cooling fins 20 in the battery 1 according to the invention. The respective cooling fins 20 are designed differently from one another and are arranged in such a way that each battery cell 3 in the cell stack 2 is enclosed i.e. surrounded by at least two and at most four cooling fins 20. As a result, each battery cell 3 in the cell stack is enclosed by 50% to 100% by the cooling fins 20. Depending on the number and arrangement of the battery cells 3 in the cell stack 2, the number, the design and the arrangement of the cooling fins 20 can be adapted. As a result, the battery cells 3 in the differently configured batteries 1 can be effectively cooled by the cooling fins 20.

## Claims

1. Battery (1) for a motor vehicle,
- wherein the battery (1) contains a cell stack (2) with a plurality of battery cells (3) and a cooling device (8) with a cooling plate (12) and with at least one cooling fin (20),
- wherein the battery cells (3) are aligned in the cell stack (2) parallel to a longitudinal direction (LR) of the cell stack (2) and arranged side by side in at least one cell row,
- wherein the cooling plate (12) is aligned transversely to the longitudinal direction (LR) of the cell stack (2) and is connected to the battery cells (3) in a heat-conducting manner,
- wherein the respective cooling fin (20) is arranged parallel to the longitudinal direction (LR) of the cell stack (2) and adjacent to at least some battery cells (3) in the respective cell row, and
- wherein the respective cooling fin (20) is connected to the respective adjacent battery cells (3) in the respective cell row and to the cooling plate (12) in a heat-conducting manner,
**characterized**
**in that** the respective cooling fin (20) is formed in one piece from a heat-conducting material and encloses at least one of the respective adjacent battery cells (3) at its circumference defined transversely to the longitudinal direction (LR) by 25% to 50%.

2. Battery according to claim 1,
**characterized**
- **in that** the respective cooling fin (20) contains a contour (20a) for the respective adjacent battery cells (3), and
- **in that** the contour (20a) follows the shape of the respective adjacent battery cells (3) and the respective cooling fin (20) fits tightly against the respective adjacent battery cells (3) with the contour (20a) over the entire surface in a heat-conducting manner.

3. Battery according to claim 1 or 2,
**characterized**
**in that** the battery cells (3) are cylindrical and the respective cooling fin (20) encloses at least one of the respective adjacent battery cells (3) with a central angle (MP) between 90° and 180° defined to the longitudinal central axis (LA) of the respective adjacent battery cell (3).

4. Battery according to any one of the preceding claims,
**characterized**
- **in that** the respective cooling fin (20) is formed from metal, preferably from aluminum, and/or
- **in that** the cooling plate (12) is formed from a heat-conducting material, preferably from metal, particularly preferably from aluminum, and/or
- that the cooling plate (12) can be flowed through by a cooling fluid.

5. Battery according to any one of the preceding claims,
**characterized**
- **in that** the respective cooling fin (20) is bonded to the respective adjacent battery cells (3) by means of a heat-conducting adhesive, and/or
- **in that** the respective cooling fin (20) is bonded to the respective adjacent battery cells (3) by means of a spray adhesive, and/or
- **in that** the respective cooling fin (20) is bonded to the respective adjacent battery cells (3) over the entire surface, and/or
- **in that** the respective cooling fin (20) is bonded to the respective adjacent battery cells (3) by means of an adhesive layer with a thickness of less than 1 mm.

6. Battery according to any one of the preceding claims,
**characterized**
- **in that** the battery cells (3) in the cell stack (2) form at least two cell rows and the respective cooling fin (20) is arranged between the cell rows, and
- **in that** the respective cooling fin (20) encloses in each case at least one of the respective adjacent battery cells (3) in the two cell rows in each case on its circumference defined transversely to the longitudinal direction (LR) by 25% to 50%.

7. Battery according to claim 6,
**characterized**
**in that** the respective cooling fin (20) fills at least 80% of a gap formed between the respective adjacent cell rows.

8. Battery according to claim 6 or 7,
**characterized**
- **in that** the respective cooling fin (20) in the two adjacent cell rows encloses an identical number of the battery cells (3), or
- **in that** the respective cooling fin (20) encloses one more battery cell (3) in the one cell row than in the other cell row.

9. Battery according to any one of the preceding claims,
**characterized**
**in that** the cooling device (8) contains a plurality of cooling fins (20) and each battery cell (3) of the cell stack (2) is enclosed by the cooling fins (20) at its circumference defined transversely to the longitudinal direction (LR) by 50% to 100%.

10. Battery according to any one of the preceding claims,
**characterized**
**in that** the cooling device (8) contains a plurality of cooling fins (20) and each battery cell (3) of the cell stack (2) is enclosed by at least two and at most four adjacent cooling fins (20).
